# EUROPEAN PATENT APPLICATION

(11) **EP 4 668 704 A1**
(43) Date of publication of application: **24.12.2025**
(21) Application number: 24769935.8
(22) Date of filing: 12.03.2024
(51) Int. Cl.: H04L 47/10

(54) **NETWORK FLOW CONTROL METHOD AND APPARATUS**

(30) Priority: 13.03.2023 CN 202310261079
(71) Applicant: Huawei Technologies Co., Ltd., Shenzhen, Guangdong 518129 (CN)
(72) Inventor: CHEN, Fei, Shenzhen, Guangdong 518129 (CN); LYU, Yunping, Shenzhen, Guangdong 518129 (CN); WU, Tao, Shenzhen, Guangdong 518129 (CN); ZHANG, Yuhan, Shenzhen, Guangdong 518129 (CN); YAN, Jian, Shenzhen, Guangdong 518129 (CN); NIE, Jianqiang, Shenzhen, Guangdong 518129 (CN)
(74) Representative: Isarpatent
(86) International application number: PCT/CN2024/081232
(87) International publication number: WO 2024/188244

(57) **Abstract**

This application relates to the communication field, and provides a network flow control method and an apparatus, to provide accurate flow control management. The method includes: A first network device receives a target packet from a second network device, where the target packet carries packet flow control information, and the packet flow control information includes identification information of the second network device, information about a port from which the target packet flows into the second network device, information about a queue in which the target packet is located in the second network device, and/or priority information of the target packet. The first network device determines that the second network device needs to perform a flow control operation. The first network device generates a first flow control notification based on the packet flow control information. The first network device sends the first flow control notification to the second network device, where the first flow control notification indicates the second network device to perform the flow control operation.

## Description

This application claims priority to Chinese Patent Application No. 202310261079.2, filed with the China National Intellectual Property Administration on March 13, 2023 and entitled "NETWORK FLOW CONTROL METHOD AND APPARATUS", which is incorporated herein by reference in its entirety.

### TECHNICAL FIELD

Embodiments of this application relate to the field of communication technologies, and in particular, to a network flow control method and an apparatus.

### BACKGROUND

A link-level flow control technology in a network is primarily based on the priority-based flow control (Priority-based Flow Control, PFC) standard. PFC is a flow control technology between two directly connected network devices. A station station 1, as a data receiver, prepares a buffer to store packets sent by a station 2 but not yet forwarded. When a plurality of stations send packets to the station 1 leading to congestion, this congestion propagates upward layer by layer against the direction of traffic flow, causing widespread congestion across network links.

To address the congestion propagation caused by link-level flow control, a current solution is source flow control (source flow control, SFC), which targets a network device experiencing congestion and a source network device where a congestion flow originates. The congested network device generates a congestion signal packet, and performs route lookup based on a source IP address of the congestion flow. If it is found that a destination IP address of the packet is a host connected to a switch, the network device triggers flow control for the corresponding host based on a congestion notification packet.

However, in the SFC solution, the congested network device lacks precise
identification of details regarding the source network device associated with the congestion flow, because the congested network device performs route lookup based only on the source IP address of the congestion flow. Consequently, a flow control operation may be erroneously triggered, resulting in low accuracy of flow control management.

### SUMMARY

Embodiments of this application provide a network flow control method and an apparatus, to provide accurate flow control management.

According to a first aspect, an embodiment of this application provides a network flow control method. The method is applied to a first network device on a flow control initiating side and a second network device on a flow control execution side, and the method includes: The first network device receives a target packet from the second network device, where the target packet carries packet flow control information, and the packet flow control information includes identification information of the second network device, information about a port from which the target packet flows into the second network device, information about a queue in which the target packet is located in the second network device, and/or priority information of the target packet. The first network device determines that the second network device needs to perform a flow control operation. The first network device generates a first flow control notification based on the packet flow control information. The first network device sends the first flow control notification to the second network device, where the first flow control notification indicates the second network device to perform the flow control operation.

In the possible implementation, the target packet forwarded by the second network device carries the packet flow control information, and the first network device that receives the target packet may uniquely determine, based on the packet flow control information, a link through which the packet flows into the second network device. In this way, when flow control needs to be initiated, a device, a port, and a queue on which the flow control needs to be performed can be accurately determined, to avoid triggering an incorrect flow control operation and improve accuracy of flow control management.

In a possible implementation, that the first network device generates the first flow control notification includes: The first network device determines flow control parameter information, location information of the second network device, the flow control port information, the flow control queue information, and/or the priority information of the target packet, where the flow control parameter information is used to guide the second network device to perform the flow control operation. The first network device generates the first flow control notification, where the first flow control notification includes the flow control parameter information, the location information of the second network device, the flow control port information, the flow control queue information, and/or the priority information of the target packet.

In the possible implementation, the first flow control notification sent by the first network device to the second network device includes the flow control parameter information, the location information of the second network device, the flow control port information, the flow control queue information, and/or the priority information of the target packet, so that the first flow control notification can be accurately sent to the second network device. In addition, the information about the flow control port and the information about the flow control queue indicate to perform the flow control operation on the specified port and queue, to ensure that the device, the port, and the queue on which the flow control needs to be performed can be accurately determined, and avoid triggering the incorrect flow control operation. In addition, the flow control parameter information in the first flow control notification may be further used to guide the second network device to perform the flow control operation. This increases control diversity of the flow control initiating side on the flow control operation.

In a possible implementation, the flow control parameter information includes a time interval, the time interval indicates a time interval for transmission allowed by the first network device in a current periodicity, and that the first network device determines the flow control parameter information includes: The first network device determines information about the time interval based on a queue depth, a link rate, round trip time between the first network device and the second network device, and an expected queue depth.

In the possible implementation, a method for determining the flow control parameter of time interval is specifically provided, to improve feasibility of this embodiment of this application.

In a possible implementation, that the first network device determines that the second network device needs to perform the flow control operation includes: When a current queue depth exceeds a threshold, the first network device determines that the second network device needs to perform the flow control operation.

In a possible implementation, a first flow control management segment includes the first network device and the second network device, a second flow control management segment includes a third network device on the flow control execution side, and the second flow control management segment is a next segment of the first flow control management segment. Before the first network device determines that the second network device needs to perform the flow control operation, the method further includes: The first network device receives a second flow control notification from the third network device, where the second flow control notification indicates that the third network device has triggered execution of the flow control operation.

In the possible implementation, in a scenario in which an entire network is divided into a plurality of flow control management segments, an original long control path is divided into a plurality of short control paths by dividing the entire network into the plurality of flow control management segments. Flow control management may be performed in each flow control management segment, and related information about the flow control management may be transmitted between adjacent flow control management segments. This reduces a requirement of cross-device flow control on a device buffer, can better support a large-scale networking scenario, and is more friendly for flow control management of a network device with a small buffer and a high rate.

In a possible implementation, that the first network device determines that the second network device needs to perform the flow control operation includes: The first network device determines, based on the second flow control notification, that the second network device needs to perform the flow control operation.

In the possible implementation, the first network device determines, based on the second flow control notification, that the second network device needs to perform the flow control operation. A flow control management solution between flow control management segments is provided. This is more friendly for long-distance flow control management, and improves the feasibility of this embodiment of this application.

In a possible implementation, the method further includes: The first network device deletes the packet flow control information from the target packet. The first network device forwards the target packet that does not carry the packet flow control information.

According to a second aspect, an embodiment of this application provides a network flow control method. The method includes: A second network device receives a target packet. The second network device generates packet flow control information based on the target packet, where the packet flow control information includes identification information of the second network device, information about a port from which the target packet flows into the second network device, information about a queue in which the target packet is located in the second network device, and/or priority information of the target packet. The second network device forwards the target packet carrying the packet flow control information. The second network device receives a first flow control notification from a first network device, where the first flow control notification indicates the second network device to perform a flow control operation. The second network device determines to perform the flow control operation. The second network device performs the flow control operation based on the first flow control notification.

In the possible implementation, the target packet forwarded by the second network device carries the packet flow control information, and the first network device that receives the target packet may uniquely determine, based on the packet flow control information, a link through which the packet flows into the second network device. In this way, when flow control needs to be initiated, a device, a port, and a queue on which the flow control needs to be performed can be accurately determined, to avoid triggering an incorrect flow control operation and improve accuracy of flow control management.

In a possible implementation, the first flow control notification includes flow control parameter information, and that the second network device performs the flow control operation based on the first flow control notification includes: The second network device performs the flow control operation based on the flow control parameter information. In addition/Alternatively, the first flow control notification includes the information about the flow control port, and that the second network device performs the flow control operation based on the indication of the first flow control notification includes: The second network device performs the flow control operation on the port indicated by the information about the flow control port. In addition/Alternatively, the first flow control notification includes the information about the flow control queue, and that the second network device performs the flow control operation based on the indication of the first flow control notification includes: The second network device performs the flow control operation on the queue indicated by the information about the flow control queue. In addition/Alternatively, the first flow control notification includes the priority information of the target packet, and that the second network device performs the flow control operation based on the indication of the first flow control notification includes: The second network device performs the flow control operation based on the priority information of the target packet.

In a possible implementation, a first flow control management segment includes the first network device and the second network device, a third flow control management segment includes a fourth network device on a flow control initiating side, and the third flow control management segment is a previous segment of the first flow control management segment. After the second network device receives the first flow control notification from the first network device, the method further includes: The second network device sends a third flow control notification to the fourth network device, where the third flow control notification indicates that the second network device has triggered execution of the flow control operation.

In the possible implementation, in a scenario in which an entire network is divided into a plurality of flow control management segments, an original long control path is divided into a plurality of short control paths by dividing the entire network into the plurality of flow control management segments. Flow control management may be performed in each flow control management segment, and related information about the flow control management may be transmitted between adjacent flow control management segments. This reduces a requirement of cross-device flow control on a device buffer, can better support a large-scale networking scenario, and is more friendly for flow control management of a network device with a small buffer and a high rate.

According to a third aspect, an embodiment of this application provides a first network device, including a processor and a memory. The processor is coupled to the memory. The memory is configured to store computer instructions, and the computer instructions are loaded and executed by the processor, so that the first network device implements any method provided in the first aspect.

According to a fourth aspect, an embodiment of this application provides a second network device, including a processor and a memory. The processor is coupled to the memory. The memory is configured to store computer instructions, and the computer instructions are loaded and executed by the processor, so that the second network device implements any method provided in the second aspect.

According to a fifth aspect, an embodiment of this application provides a chip. The chip includes a processor and an interface circuit. The interface circuit is configured to receive code instructions and transmit the code instructions to the processor. The processor is configured to run the code instructions to perform any method provided in the first aspect.

According to a sixth aspect, an embodiment of this application provides a chip. The chip includes a processor and an interface circuit. The interface circuit is configured to receive code instructions and transmit the code instructions to the processor. The processor is configured to run the code instructions to perform any method provided in the second aspect.

According to a seventh aspect, an embodiment of this application provides a computer-readable storage medium. The computer-readable storage medium stores at least one computer program instruction, and the computer program instruction is loaded and executed by a processor to implement any method provided in the first aspect.

According to an eighth aspect, an embodiment of this application provides a computer-readable storage medium. The computer-readable storage medium stores at least one computer program instruction, and the computer program instruction is loaded and executed by a processor to implement any method provided in the second aspect.

According to a ninth aspect, an embodiment of this application provides a computer program product, including computer-executable instructions. When the computer-executable instructions are run on a computer, the computer is caused to perform any method provided in the first aspect.

According to a tenth aspect, an embodiment of this application provides a computer program product, including computer-executable instructions. When the computer-executable instructions are run on a computer, the computer is caused to perform any method provided in the second aspect.

For technical effects brought by any implementation of the third aspect to the tenth aspect, refer to technical effects brought by a corresponding implementation of the first aspect and the second aspect. Details are not described herein again.

### BRIEF DESCRIPTION OF DRAWINGS

FIG. 1 is a diagram of a scenario of a link-level flow control technology;
FIG. 2 is a diagram of a congestion propagation scenario;
FIG. 3 is a diagram of a scenario of a source flow control SFC solution;
FIG. 4 is a diagram of a data center network scenario according to an embodiment of this application;
FIG. 5 is a diagram of a structure of a network device according to an embodiment of this application;
FIG. 6 is a schematic flowchart of a network flow control method according to an embodiment of this application;
FIG. 7 is a diagram of a scenario of generating target packet flow control information according to an embodiment of this application;
FIG. 8 is a diagram of a structure of a flow control management system according to an embodiment of this application;
FIG. 9 is a schematic flowchart of another network flow control method according to an embodiment of this application;
FIG. 10 is a diagram of a structure of a first flow control notification according to an embodiment of this application;
FIG. 11 is a diagram of a structure of a first network device according to an embodiment of this application;
FIG. 12 is a diagram of a structure of a second network device according to an embodiment of this application;
FIG. 13 is a diagram of a structure of another first network device according to an embodiment of this application;
FIG. 14 is a diagram of a structure of another second network device according to an embodiment of this application; and
FIG. 15 is a diagram of a structure of a flow control management system according to an embodiment of this application.

### DESCRIPTION OF EMBODIMENTS

In descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference.

In embodiments of this application, the word "example" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the words such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, unless otherwise specified, for same or similar parts of embodiments, mutual reference may be made between embodiments. In embodiments of this application, unless otherwise specified or a logical conflict occurs, terms and/or descriptions in different embodiments are consistent and may be referenced by each other, and different embodiments may be combined based on internal logical relationships between embodiments to form a new embodiment. The following implementations of this application are not intended to limit the protection scope of this application.

For ease of understanding the technical solutions in embodiments of this application, the following first briefly describes related technologies in embodiments of this application.

### 1. Link-level flow control

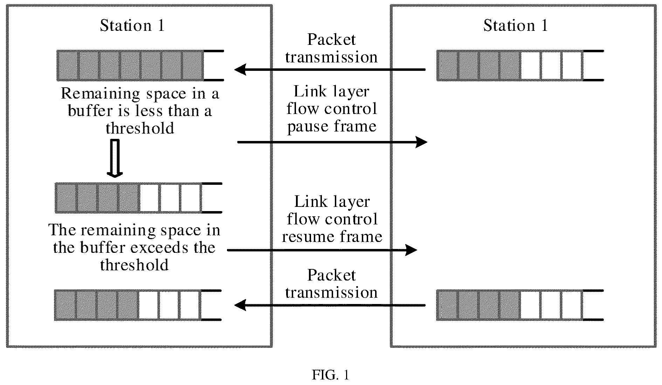

As shown in FIG. 1, a link-level flow control technology in a network is primarily based on a priority-based flow control PFC standard. PFC is a flow control technology between two directly connected network devices. A station station 1, as a data receiver, prepares a buffer to store packets sent by a station 2 but not yet forwarded. When remaining space in the buffer of the station 1 is smaller than a threshold, the station 1 sends a link layer flow control pause frame, which is a PFC Pause message, to the station 2. Upon receiving the PFC Pause message, the station 2 stops sending packets to the station 1. The station 1 continues to forward packets in the buffer, ensuring no new packets added to the buffer of the station 1, thereby gradually increasing the remaining space in the buffer as packets are forwarded. Once the remaining space in the buffer of the station 1 exceeds the threshold, the station 1 sends a link layer flow control resume PFC Resume frame to the station 2, and the station 2 continues to send a packet to the station 1 after receiving the PFC Resume frame.

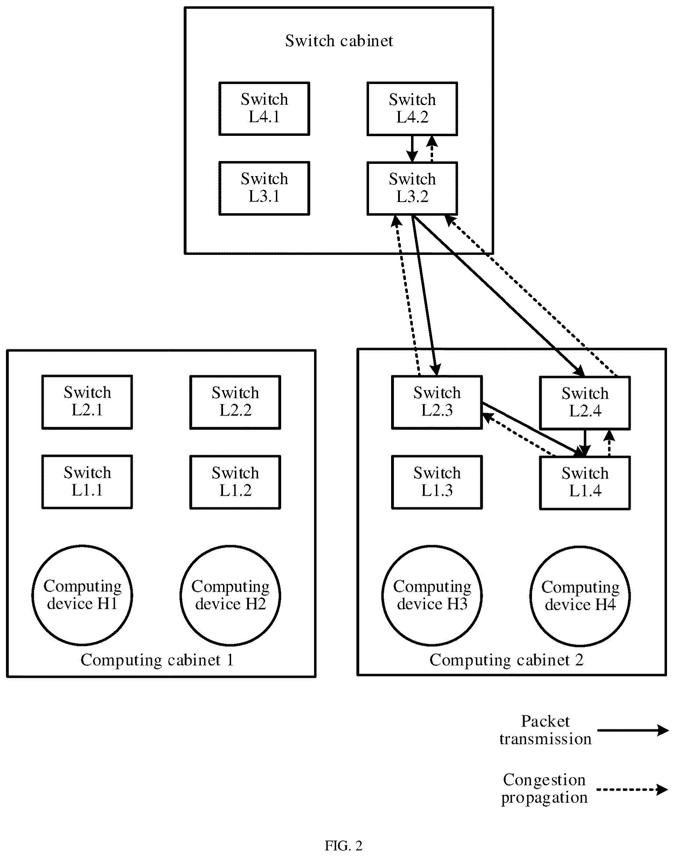

As shown in FIG. 2, link-level flow control can lead to congestion propagation. A single port of a switch L1.4 receives traffic from switches L2.3 and L2.4, meaning a plurality of switches at an L2 layer simultaneously forward the traffic to the same port of the switch L1.4. As a result, the switch L1.4 cannot process the traffic in time, resulting in packets accumulation in a buffer of the switch L1. When a quantity of packets backlogged in the buffer of the switch L1.4 exceeds a threshold, a PFC flow control mechanism is triggered, to suspend forwarding of traffic from L2.3 and L2.4 to L1. Because the forwarding of the traffic from L2.3 and L2.4 to L1.4 is suspended, the traffic is backlogged in buffers of L2.3 and L2.4. When a quantity of packets backlogged in the buffers of L2.3 and L2.4 exceeds a threshold, the PFC flow control mechanism is triggered again, and consequently, backpressure continues to be generated to a switch at an L3 layer. Congestion further propagates from the L2 layer to the L3 layer. This process is repeated at the L3 layer. In this case, the congestion propagates upward layer by layer against the direction of traffic forwarding, leading to propagation of congestion across network links. Currently, while chip port switching rates continuously increase, chip buffer capacity seen minimal growth, exacerbating likelihood and intensity of the congestion propagation across network links, especially within expansive networking scenarios.

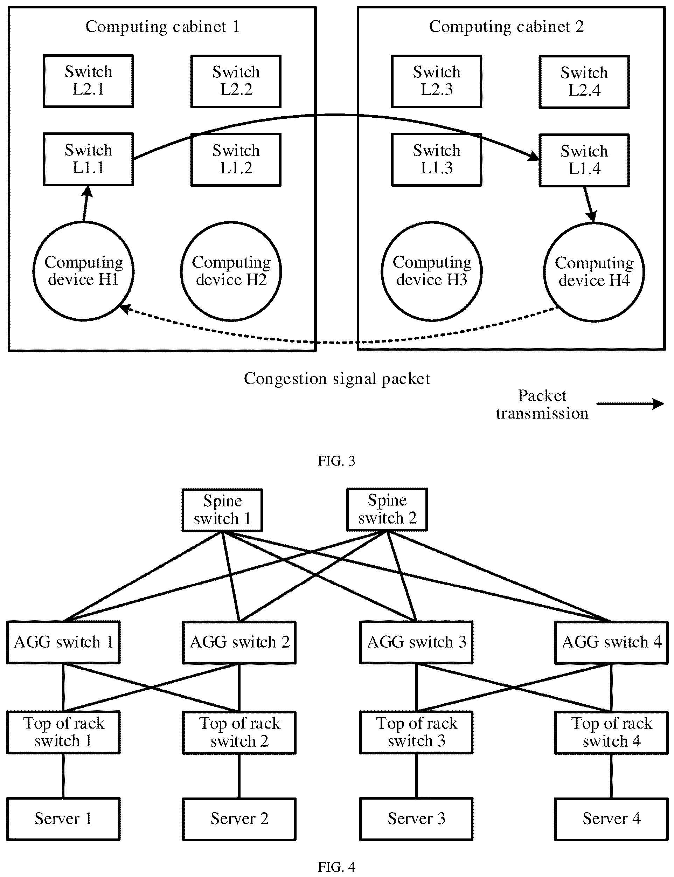

As shown in FIG. 3, a current solution to congestion propagation caused by link-level flow control is a source flow control SFC solution. In the SFC solution, flow control is triggered in a cross-device manner to avoid congestion propagation to an intermediate network. A difference between SFC and PFC lies in that the SFC does not function on two directly connected network devices, but functions on a network device on which congestion occurs and a source network device on which a congestion flow is located.

As shown in FIG. 3, a congestion flow arrives at a switch L1.4 (referred to as DstToR) from a computing device H1 (referred to as Sender) and through a switch L1.1 (referred to as SrcToR), and finally enters a computing device H4 (referred to as Receiver). In the SFC solution, flow control functions on two network devices: the switch L1.1 (DstToR) and the switch L1.4 (SrcToR). A specific process is as follows. According to the SFC solution, first, after congestion occurs on the switch L1.1, the switch L1.1 identifies a congestion flow that causes the congestion, and then constructs a three-layer congestion signal packet based on source and destination internet protocol (internet protocol, IP) addresses of the congestion flow, where a source IP address of the congestion signal packet is the destination IP address of the congestion flow, and a destination IP address of the congestion signal packet is the source IP address of the congestion flow. An intermediate switch performs forwarding based on the destination IP address of the congestion signal packet. After receiving the congestion signal packet, the L1.4 switch finds that the destination IP address of the packet is a host connected to the switch, so that the L1.4 switch triggers PFC flow control on the corresponding host based on a congestion notification packet.

In the SFC, there is no accurate information about SrcToR. To be specific, in the SFC, a specific port of specific SrcToR from which the congestion flow enters a network is not known, and route lookup is performed based only on the source IP address of the congestion flow. When the source IP address corresponds to two different ports, the two ports may be same SrcToR or different SrcToRs. In this case, the PFC flow control may be triggered on an incorrect device, or the PFC flow control may be triggered on a correct device but on an incorrect port. In addition, because a control path of the SFC is long, DstToR needs to have a sufficient buffer buffer to absorb traffic on the path. As a result, a requirement on DstToR is high, and it is difficult to implement the solution.

Embodiments of this application provide a network flow control method, to specify a mechanism for executing network flow control between any two devices in a network. The method includes: A second network device receives a target packet. The second network device generates packet flow control information based on the target packet, where the packet flow control information includes identification information of the second network device, information about a port from which the target packet flows into the second network device, information about a queue in which the target packet is located in the second network device, and/or priority information of the target packet. The second network device forwards the target packet carrying the packet flow control information. A first network device receives the target packet from the second network device, where the target packet carries the packet flow control information. The first network device determines that the second network device needs to perform a flow control operation. The first network device generates a first flow control notification. The first network device sends the first flow control notification to the second network device, where the first flow control notification indicates the second network device to perform the flow control operation. The second network device receives the first flow control notification from the first network device, where the first flow control notification indicates the second network device to perform the flow control operation. The second network device performs the flow control operation based on the indication of the first flow control notification. In embodiments of this application, information exchange based on the packet flow control information ensures that the correct network device can be triggered to perform the flow control operation.

As shown in FIG. 4, the network flow control method provided in embodiments of this application may be applied to a data center network scenario. A three-level CLOS architecture of a data center network shown in FIG. 4 includes three types of switches. A first type is a top of rack (top of rack, TOR) switch, where a downlink port of the top of rack switch is connected to a server, and an uplink port of the top of rack switch is connected to an aggregation (aggregation, AGG) switch. A second type is an AGG switch, where a downlink port of the AGG switch is connected to a TOR switch, and an uplink port of the AGG switch is connected to a spine spine switch. A third type is a spine switch, where the spine switch is connected to an AGG switch.

It may be understood that FIG. 4 is merely a simple example of a CLOS network. During actual deployment, quantities of servers, TOR switches, AGG switches, and spine switches need to be determined based on factors such as a network scale and an application type.

It may be understood that the network flow control method provided in embodiments of this application is not limited to the data center CLOS network, is also applicable to another network architecture, for example, a wireless mesh MESH network and a torus TORUS network, and may also be applied to another non-data center scenario in which a link-level flow control technology is used. This is not specifically limited herein.

The network flow control method provided in embodiments of this application is applicable to a PFC-based link-level flow control technology. In addition, embodiments of this application are further applicable to another link-level flow control technology, for example, a credit-based link-level flow control technology. This is not specifically limited herein.

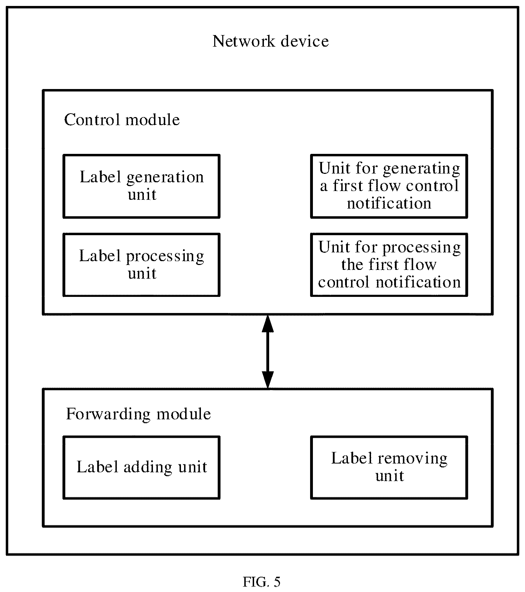

As shown in FIG. 5, the network flow control method provided in embodiments of this application may be applied to a network device. The network device may include a control module and a forwarding module. The forwarding module includes a label adding unit and a label removing unit. The control module includes a label generation unit, a label processing unit, a unit for generating a first flow control notification, and a unit for processing a first flow control notification. Packet flow control information is carried in a packet in a form of a label.

The label adding unit is configured to add a label to a packet to indicate network location information of a flow control execution side.

The label removing unit is configured to remove, on a flow control initiating side, the label added to the packet on the flow control execution side.

The label generation unit is configured to: generate a label including the location information on the flow control execution side, and encode the location information of the flow control execution side into the label according to a specific format.

The label processing unit is configured to extract and maintain the location information in the label after the flow control initiating side receives the label added on the flow control execution side.

The flow control initiating side determines, based on a local status of the device, whether flow control needs to be performed on the flow control execution side. If the flow control needs to be performed on the flow control execution side, the unit for generating the first flow control notification is configured to generate the corresponding first flow control notification.

The unit for processing a first flow control notification is configured to: parse the first flow control notification after the flow control execution side receives the first flow control notification sent by the flow control initiating side, extract a flow control-related parameter from the first flow control notification, and perform a flow control operation. The foregoing functional modules may be implemented by using a hardware circuit, or may be implemented by using program instructions of a general-purpose or dedicated processor.

The network device in embodiments of this application may be a network device like a switch or a router, or may be another device configured to transmit network information, for example, a network device like a network adapter. This is not specifically limited herein.

It may be understood that an execution body may perform some or all of steps in embodiments of this application. The steps or operations are merely examples. In embodiments of this application, other operations or variations of various operations may be further performed. In addition, the steps may be performed in a sequence different from a sequence presented in embodiments of this application, and not all the operations in embodiments of this application may be performed.

It should be noted that, in the following embodiments of this application, names of messages or names of parameters in messages of devices are merely examples, and the messages or the parameters may have other names in specific implementations. This is not specifically limited in embodiments of this application.

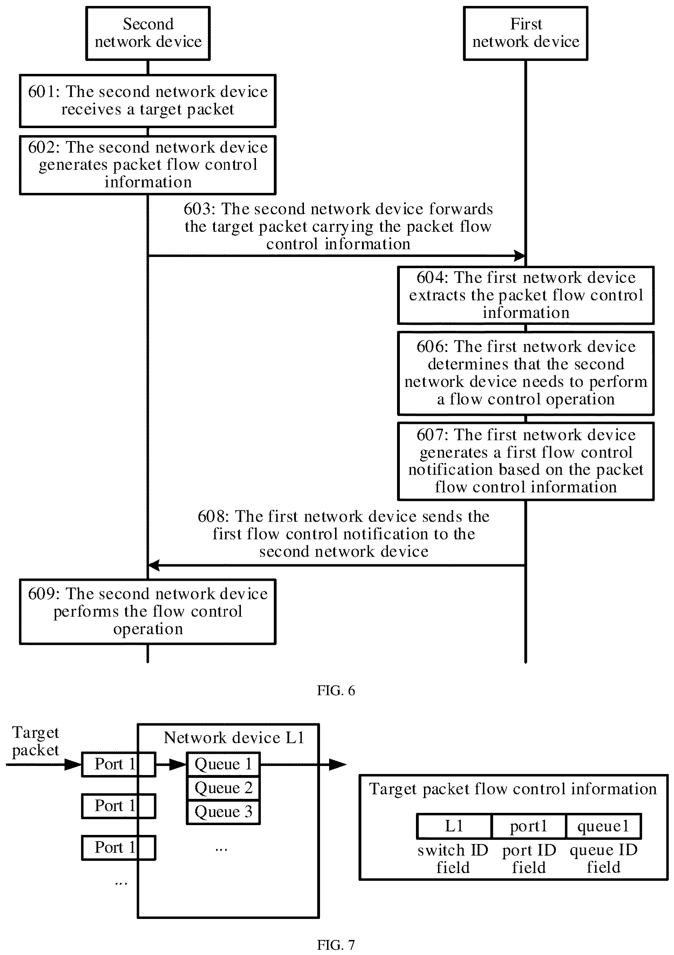

FIG. 6 shows a network flow control method according to an embodiment of this application. The method includes the following steps.

601: A second network device receives a target packet.

The second network device receives the target packet from a target port, inserts the target packet into a target queue for buffering, and prepares to forward the target packet.

602: The second network device generates packet flow control information.

The second network device generates the packet flow control information based on the target packet, where the packet flow control information includes identification information of the second network device, information about the port from which the target packet flows into the second network device, information about the queue in which the target packet is located in the second network device, and/or priority information of the target packet.

Specifically, after the target packet flows into the second network device from the target port of the second network device, the second network device inserts the target packet into the target queue, and prepares to forward the target packet. The second network device may generate the packet flow control information based on the target packet. The packet flow control information includes the identification information of the second network device, port information of the target port, queue information of the target queue, and/or the priority information of the target packet. Information about a link through which the target packet enters the second network device may be uniquely determined based on the packet flow control information.

In this embodiment of this application, the identification information of the second network device is used to uniquely determine the second network device in a network or a flow control management system. The identification information of the second network device may include one or more of the following identifiers: a MAC address of the second network device, a product serial number (serial number, SN) of the second network device, some SNs of the second network device, a sequence number of the second network device in the network or the flow control management system, a code of the second network device in the network or the flow control management system, a name of the second network device in the network or the flow control management system, or the like. This is not specifically limited herein.

In this embodiment of this application, the port information of the target port is used to uniquely determine the target port in the network, the flow control management system, or the second network device. The port information of the target port may be one or more of the following identifiers: a sequence number, a code, a name, or the like. This is not specifically limited herein.

In this embodiment of this application, the queue information of the target queue is used to uniquely determine the target queue in the network, the flow control management system, or the second network device. The queue information of the target queue may be one or more of the following identifiers: a sequence number, a code, a name, or the like. This is not specifically limited herein.

In this embodiment of this application, the priority information of the target packet is used to determine a priority of the target packet during packet transmission.

In a possible implementation, there is a corresponding mapping relationship between the queue information of the target packet and the priority information of the target packet in this embodiment of this application. If the priority information of the target packet is a lowest level, the network device may place the target packet in a queue with a lowest priority. If the priority information of the target packet is a highest level, the network device may place the target packet in a queue with a highest priority. In other words, the queue information of the target packet may be determined based on the priority information of the target packet, or the priority information of the target packet may be determined based on the queue information of the target packet.

As shown in FIG. 7, for example, a target packet enters a network device L1 from a port 1, the network device L1 inserts the target packet into a queue 1 and prepares to forward the target packet, and the device L1 may generate target packet flow control information. A switch ID field of the target packet flow control information is L1, a port ID field of the target packet flow control information is port1, and a queue ID field of the target packet flow control information is queue1. The switch ID field of the target packet flow control information indicates device identification information of the device L1, the port ID field of the target packet flow control information indicates information about the port from which the target packet flows into the device L1, and the queue ID field of the target packet flow control information indicates information about the queue in which the target packet is located in the device L1.

It may be understood that, in this embodiment of this application, the packet flow control information carried in the target packet may be in one label or a plurality of continuous fields as a whole. For example, the target packet carries a packet flow control label, and the label includes the packet flow control information. Alternatively, a corresponding field is added to a header part of the target packet to carry the packet flow control information. In addition, the packet flow control information may alternatively be scattered in fields of the target packet, and the fields carrying the packet flow control information are not continuous. This is not specifically limited herein.

603: The second network device forwards the target packet carrying the packet flow control information.

After generating the packet flow control information, the second network device adds the packet flow control information to the packet, and then forwards the target packet carrying the packet flow control information. The packet flow control information is carried in the packet and forwarded to a first network device on a flow control initiating side.

Correspondingly, the first network device receives the target packet carrying the packet flow control information from the second network device.

In this embodiment of this application, the target packet forwarded by the second network device carries the packet flow control information, and the first network device receiving the target packet may uniquely determine, based on the packet flow control information, the link through which the packet flows into the second network device. In this way, when flow control needs to be initiated, a device, a port, and a queue on which the flow control needs to be performed can be accurately determined, to avoid triggering an incorrect flow control operation.

604: The first network device extracts the packet flow control information.

After receiving the target packet carrying the packet flow control information from the second network device, the first network device extracts the packet flow control information from the target packet. The first network device may determine, by parsing the packet flow control information, the identification information of the second network device, the port information of the target port, and the queue information of the target queue, to uniquely determine information about the link through which the target packet enters the second network device.

In a possible implementation, after extracting the packet flow control information, the first network device deletes the packet flow control information from the target packet, and then forwards the target packet that does not carry the packet flow control information to a next hop, to reduce a size of the target packet.

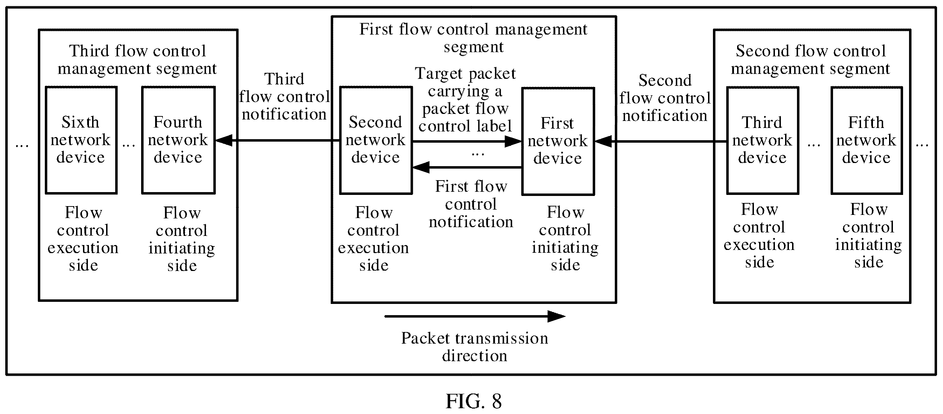

As shown in FIG. 8, in a possible implementation, an entire network may be divided into a plurality of flow control management segments. Each flow control management segment includes a network device on a flow control initiating side and a network device on a flow control execution side. Each flow control management segment includes at least two network devices. In each flow control management segment the flow control management method may be performed by the network device on the flow control initiating side and the network device on the flow control execution side. A first flow control management segment includes the first network device on the flow control initiating side and the second network device on the flow control execution side. A second flow control management segment includes a fifth network device on the flow control initiating side and a third network device on the flow control execution side. A third flow control management segment includes a fourth network device on the flow control initiating side and a sixth network device on the flow control execution side. In the possible implementation, the network flow control method provided in this embodiment of this application further includes step 605.

605: The first network device receives a second flow control notification from the third network device.

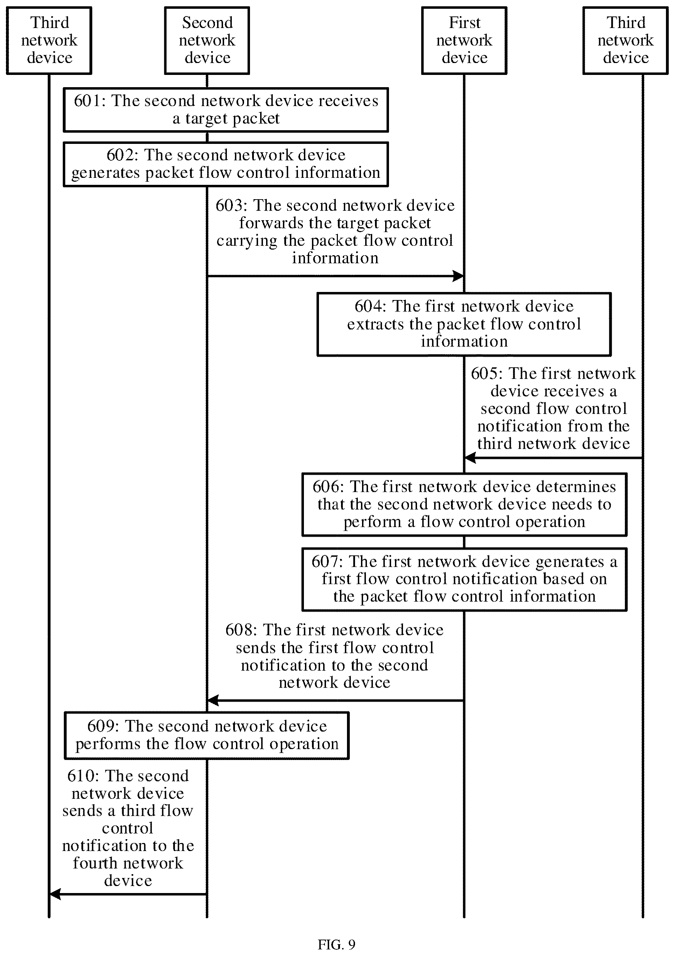

As shown in FIG. 9, in a scenario in which the flow control management system may divide the entire network into the plurality of flow control management segments, when the third network device on the flow control execution side of the second flow control management segment determines to perform a flow control operation, in other words, when the third network device triggers execution of the flow control operation, because a packet is transmitted between the first flow control management segment and the second flow control management segment, the third network device sends the second flow control notification to the first network device, where the second flow control notification indicates that the third network device has triggered the execution of the flow control operation.

Correspondingly, the first network device receives the second flow control notification from the third network device.

606: The first network device determines that the second network device needs to perform the flow control operation.

The first network device performs congestion detection based on a current packet forwarding status, and further determines that traffic congestion has occurred and that the target packet belongs to a congestion flow. To avoid congestion propagation, the first network device determines that the second network device needs to perform the flow control operation.

In a possible implementation, the first network device may determine, by using a single threshold mechanism, whether the congestion occurs currently. When a queue depth exceeds a preset first threshold K1, the first network device determines that the congestion has occurred currently. When the queue depth is less than the preset first threshold, the first network device determines that no congestion occurs currently.

In another possible implementation, the first network device may determine, by using a dual-threshold mechanism, whether the congestion occurs currently. When a queue depth is less than a second threshold Kmin, the first network device determines that no congestion occurs currently. When the queue depth exceeds a third threshold Kmax, the first network device determines that the congestion has occurred currently. When the queue depth exceeds Kmin and is less than Kmax, the first network device may determine, based on a specific probability, whether the congestion occurs.

In a possible implementation, in the scenario in which the flow control management system may divide the entire network into the plurality of flow control management segments, the first network device determines whether the second network device needs to perform the flow control operation, and further determines, based on the second flow control notification from the third network device, whether the second network device needs to perform the flow control operation. Specifically, after the first network device receives the second flow control notification from the third network device, the first network device may determine that the second network device needs to perform the flow control operation.

It may be understood that the first network device may comprehensively consider the second flow control notification and whether the congestion occurs currently, to determine whether the second network device needs to perform the flow control operation. For example, for two conditions: that the second flow control notification is received and that the congestion occurs, the first network device may determine, when either of the two conditions is met, that the second network device needs to perform the flow control operation, or the first network device may determine, only when both of the conditions are met, that the second network device needs to perform the flow control operation. In addition, there may be another condition for triggering the first network device to determine that the second network device needs to perform the flow control operation. This is not specifically limited herein.

607: The first network device generates a first flow control notification based on the packet flow control information.

When determining that the second network device needs to perform flow control, the first network device generates the first flow control notification based on the packet flow control information, where the first flow control notification indicates the second network device to perform the flow control operation based on the indication of the first flow control notification. The first flow control notification may include flow control parameter information, location information of the second network device, the information about the flow control port, and the information about the flow control queue.

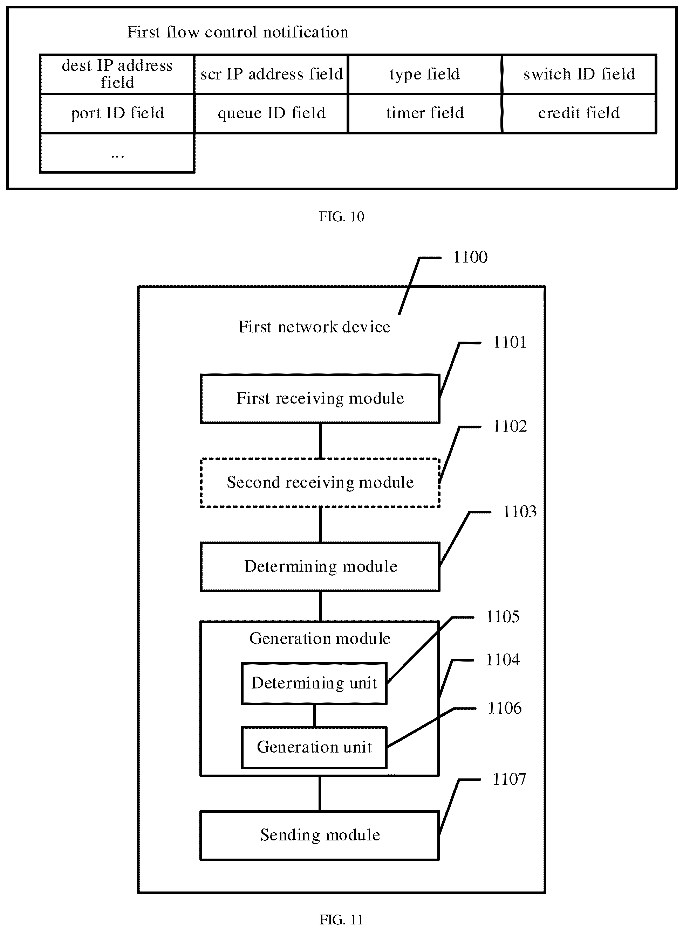

As shown in FIG. 10, specifically, the first flow control notification may include a dest IP address field, indicating an IP address of a network device that receives the first flow control notification; may further include an scr IP address field, indicating an IP address of the first network device on the flow control initiating side; may further include a type field, indicating that a message type of the packet is a first flow control notification, and further indicating a processing procedure after a flow control receiver receives the first flow control notification; may further include a switch ID field, indicating an identifier of a network device that performs the flow control operation; may further include a port ID field, indicating an identifier of a port on which the flow control operation is performed; may further include a queue ID field, indicating an identifier of a queue on which the flow control operation is performed; may further include a timer field, indicating a time interval for transmission allowed in a current periodicity; and may further include a credit field, indicating a quantity of signaling allowed to be added in the current periodicity. In addition, another field may be included. This is not specifically limited herein.

It may be understood that, the location information of the second network device includes the dest IP address field and the switch ID field, the flow control parameter information includes the timer field, the credit field, and the type field, the information about the flow control port includes the port ID field, and the information about the flow control queue includes the queue ID field.

It may be understood that the identifier of the network device that performs the flow control operation indicated by the switch ID field, the port identifier indicated by the port ID field, and the queue identifier indicated by the queue ID field may all be obtained by the first network device by extracting and parsing the packet flow control information. The first network device may perform, according to a preconfigured device address translation table, mutual translation on the IP address that is indicated by the dest IP address field and that is of the network device that receives the first flow control notification and the identifier that is indicated by the switch ID field and that is of the network device that performs the flow control operation. The device address translation table indicates a one-to-one correspondence between the identifier and the IP address of the network device.

In a possible implementation, the first network device may determine the flow control parameter information through calculation. For example, the first network device may first obtain a current queue depth (qcurrent), a current link rate (rlink), round trip time (round trip time, RTT) between the first network device and the second network device, and an expected queue depth (qtarget). In other words, the queue depth is expected to be lower than qtarget. Then, the first network device determines the time interval timer=(qtarget-qcurrent)/rlink-RRT allowed for transmission in the current periodicity, to obtain the flow control parameter timer.

608: The first network device sends the first flow control notification to the second network device.

The first network device sends the first flow control notification to the second network device, where the first flow control notification indicates that the first network device determines that the second network device needs to perform the flow control operation. Correspondingly, the second network device receives the first flow control notification from the first network device.

In this embodiment of this application, the first flow control notification sent by the first network device to the second network device includes the flow control parameter information, the location information of the second network device, the information about the flow control port, and the information about the flow control queue, so that the first flow control notification can be accurately sent to the second network device. In addition, the information about the flow control port and the information about the flow control queue indicate to perform the flow control operation on the specified port and queue, to ensure that the device, the port, and the queue on which flow control needs to be performed can be accurately determined, and avoid triggering an incorrect flow control operation. In addition, the flow control parameter information in the first flow control notification may be further used to guide the second network device to perform the flow control operation. This increases control diversity of the flow control initiating side on the flow control operation.

609: The second network device performs the flow control operation.

After receiving the first flow control notification from the first network device, the second network device extracts a related field of the first flow control notification according to a processing procedure indicated by the type field of the first flow control notification, and obtains the flow control parameter information. Then, the second network device performs the flow control operation on the queue on the corresponding port based on the information about the flow control port and the information about the flow control queue in the first flow control notification.

In a possible implementation, after obtaining the flow control parameter information, the information about the flow control port, and the information about the flow control queue, the second network device further determines, based on a flow control status of the queue on the corresponding port, whether the flow control operation needs to be performed. If the flow control operation needs to be performed, the second network device performs the flow control operation on the queue on the port. For example, after receiving the first flow control notification, the second network device determines that the queue on the corresponding port is already in a flow control management state, in other words, the flow control operation has been performed. In this case, the second network device may not trigger execution of a new flow control operation.

In this embodiment of this application, performing the flow control operation by the second network device may be sending a flow control frame like a PFC backpressure frame to the queue on the corresponding port. In addition, another flow control operation may alternatively be performed, for example, suspending sending a packet to the first network device. This is not specifically limited herein.

In the scenario in which the flow control management system may divide the entire network into the plurality of flow control management segments, the network flow control method provided in this embodiment of this application further includes step 610.

610: The second network device sends a third flow control notification to the fourth network device.

As shown in FIG. 9, in the scenario in which the flow control management system may divide the entire network into the plurality of flow control management segments, after the second network device determines to perform the flow control operation, in other words, when the second network device triggers the execution of the flow control operation, because a packet is transmitted between the first flow control management segment and the third flow control management segment, the second network device sends the third flow control notification to the fourth network device, where the third flow control notification indicates that the second network device has triggered the execution of the flow control operation.

In this embodiment of this application, in the scenario in which the flow control management system may divide the entire network into the plurality of flow control management segments, an original long control path is divided into a plurality of short control paths by dividing the entire network into the plurality of flow control management segments. Flow control management may be performed in each flow control management segment, and related information about the flow control management may be transmitted between adjacent flow control management segments. This reduces a requirement of cross-device flow control on a device buffer, can better support a large-scale networking scenario, and is more friendly for flow control management of a network device with a small buffer and a high rate.

An embodiment of this application provides a first network device 1100. In this embodiment of this application, the first network device 1100 may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

When each functional module is obtained through division based on each corresponding function, FIG. 11 is a diagram of a possible structure of the first network device 1100 in the foregoing embodiments. As shown in FIG. 11, the first network device 1100 includes:

A first receiving module 1101 is configured to receive a target packet from a second network device, where the target packet carries packet flow control information, the packet flow control information includes identification information of the second network device, information about a port from which the target packet flows into the second network device, information about a queue in which the target packet is located in the second network device, and/or priority information of the target packet. For example, step 603 in the foregoing method embodiment is performed: The second network device forwards the target packet carrying the packet flow control information.

In a possible implementation, the first network device 1100 further includes:

A second receiving module 1102 is configured to receive a second flow control notification from a third network device, where the flow control notification indicates that the third network device has triggered execution of a flow control operation. For example, step 605 in the foregoing method embodiment is performed: The first network device receives the second flow control notification from the third network device.

A determining module 1103 is configured to determine that the second network device needs to perform the flow control operation. For example, step 606 in the foregoing method embodiment is performed: The first network device determines that the second network device needs to perform the flow control operation.

In a possible implementation, the determining module 1103 is specifically configured to determine, based on the second flow control notification, that the second network device needs to perform the flow control operation. For example, step 606 in the foregoing method embodiment is performed: The first network device determines that the second network device needs to perform the flow control operation.

A generation module 1104 is configured to generate a first flow control notification based on the packet flow control information. For example, step 607 in the foregoing method embodiment is performed: The first network device generates the first flow control notification based on the packet flow control information.

The generation module 1104 includes:
A determining unit 1105 is configured to determine flow control parameter information, location information of the second network device, the flow control port information, the flow control queue information, and/or the priority information of the target packet, where the flow control parameter information is used to guide the second network device to perform the flow control operation. For example, step 607 in the foregoing method embodiment is performed: The first network device generates the first flow control notification based on the packet flow control information.

In a possible implementation, the flow control parameter information includes a time interval, and the time interval indicates a time interval for transmission allowed by the first network device in a current periodicity. The determining unit 1105 is specifically configured to determine information about the time interval based on a queue depth, a link rate, round trip time between the first network device and the second network device, and an expected queue depth. For example, step 607 in the foregoing method embodiment is performed: The first network device generates the first flow control notification based on the packet flow control information.

A generation unit 1106 is configured to generate the first flow control notification, where the first flow control notification includes the flow control parameter information, the location information of the second network device, the information about the flow control port, and the information about the flow control queue. For example, step 607 in the foregoing method embodiment is performed: The first network device generates the first flow control notification based on the packet flow control information.

A sending module 1107 is configured to send the first flow control notification to the second network device, where the first flow control notification indicates the second network device to perform the flow control operation. For example, step 608 in the foregoing method embodiment is performed: The first network device sends the first flow control notification to the second network device.

The modules of the first network device may be further configured to perform other actions in the foregoing method embodiments. All related content of the steps in the foregoing method embodiments may be cited in function descriptions of corresponding functional modules. Details are not described herein again.

An embodiment of this application provides a second network device 1200. In this embodiment of this application, the second network device 1200 may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

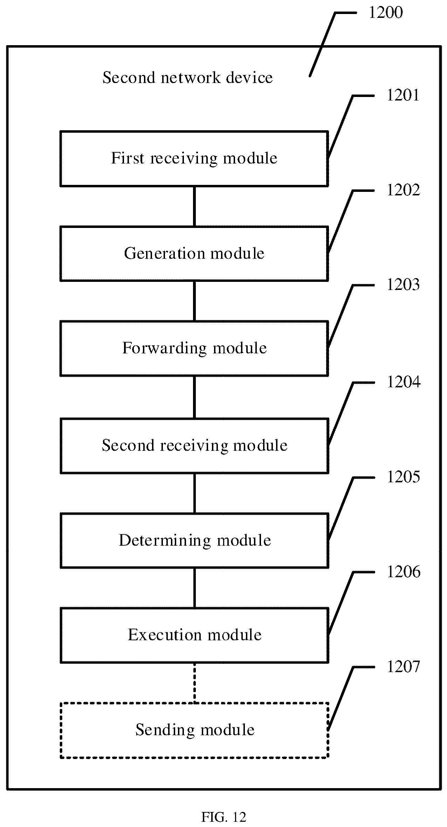

When each functional module is obtained through division based on each corresponding function, FIG. 12 is a diagram of a possible structure of the second network device 1200 in the foregoing embodiments. As shown in FIG. 12, the second network device 1200 includes:

A first receiving module 1201 is configured to receive a target packet. For example, step 608 in the foregoing method embodiment is performed: The second network device receives the target packet.

A generation module 1202 is configured to generate packet flow control information based on the target packet, where the packet flow control information includes identification information of the second network device, information about a port from which the target packet flows into the second network device, information about a queue in which the target packet is located in the second network device, and/or priority information of the target packet. For example, step 602 in the foregoing method embodiment is performed: The second network device generates the packet flow control information.

A forwarding module 1203 is configured to forward the target packet carrying the packet flow control information. For example, step 603 in the foregoing method embodiment is performed: The second network device forwards the target packet carrying the packet flow control information.

A second receiving module 1204 is configured to receive a first flow control notification from a first network device, where the first flow control notification indicates the second network device to perform a flow control operation. For example, step 608 in the foregoing method embodiment is performed: The first network device sends the first flow control notification to the second network device.

A determining module 1205 is configured to determine to perform the flow control operation. For example, step 609 in the foregoing method embodiment is performed: The second network device performs the flow control operation.

An execution module 1206 is configured to perform the flow control operation based on the first flow control notification. For example, step 609 in the foregoing method embodiment is performed: The second network device performs the flow control operation.

In a possible implementation, the first flow control notification includes flow control parameter information, and the execution module 1206 is specifically configured to perform the flow control operation based on the flow control parameter information. In addition/Alternatively, the first flow control notification includes the information about the flow control port, and the execution module 1206 is specifically configured to perform the flow control operation performed for the second network device on the port indicated by the information about the flow control port. In addition/Alternatively, the first flow control notification includes the information about the flow control queue, and the execution module 1206 is specifically configured to perform the flow control operation performed for the second network device on the queue indicated by the information about the flow control queue. In addition/Alternatively, the first flow control notification includes the priority information of the target packet, and the execution module is specifically configured to perform the flow control operation based on the flow control parameter information. For example, step 609 in the foregoing method embodiment is performed: The second network device performs the flow control operation.

In a possible implementation, a first flow control management segment includes the first network device and the second network device 1200. A third flow control management segment includes a fourth network device on a flow control initiating side, and the third flow control management segment is a previous segment of the first flow control management segment. The second network device 1200 further includes:

A sending module 1207 is configured to send a third flow control notification to the fourth network device, where the third flow control notification indicates that the second network device has triggered execution of the flow control operation. For example, step 610 in the foregoing method embodiment is performed: The second network device sends the third flow control notification to the fourth network device.

The modules of the second network device may be further configured to perform other actions in the foregoing method embodiments. All related content of the steps in the foregoing method embodiments may be cited in function descriptions of corresponding functional modules. Details are not described herein again.

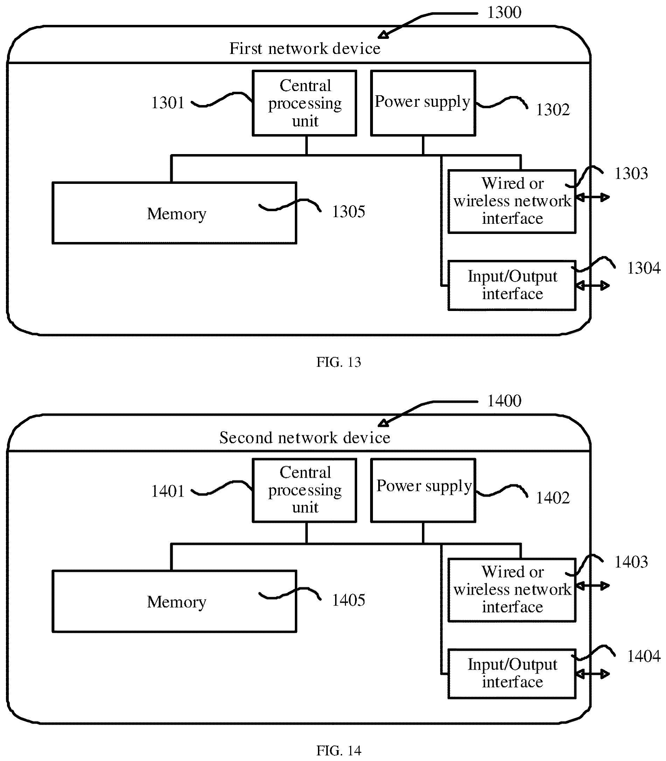

FIG. 13 is a diagram of a structure of a first network device according to an embodiment of this application. The first network device 1300 may include one or more central processing units (central processing units, CPUs) 1301 and a memory 1305. The memory 1305 stores one or more application programs or data.

The memory 1305 may be a volatile storage or a persistent storage. The program stored in the memory 1305 may include one or more modules, and each module may include a series of instruction operations on the first network device. Further, the central processing unit 1301 may be configured to: communicate with the memory 1305, and perform, on the first network device 1300, the series of instruction operations in the memory 1305.

The central processing unit 1301 is configured to execute a computer program in the memory 1305, so that the first network device 1300 is configured to perform the following operations: A first network device receives a target packet from a second network device, where the target packet carries packet flow control information, and the packet flow control information includes identification information of the second network device, information about a port from which the target packet flows into the second network device, information about a queue in which the target packet is located in the second network device, and/or priority information of the target packet. The first network device determines that the second network device needs to perform a flow control operation. The first network device generates a first flow control notification based on the packet flow control information. The first network device sends the first flow control notification to the second network device, where the first flow control notification indicates the second network device to perform the flow control operation. For a specific implementation, refer to steps 601 to 610 in the embodiment shown in FIG. 6. Details are not described herein again.

The first network device 1300 may further include one or more power supplies 1302, one or more wired or wireless network interfaces 1303, one or more input/output interfaces 1304, and/or one or more operating systems such as Windows ServerTM, Mac OS XTM, UnixTM, LinuxTM, and FreeBSDTM.

The first network device 1300 may perform the operations performed by the first network device in the embodiment shown in FIG. 6. Details are not described herein again.

FIG. 14 is a diagram of a structure of a second network device according to an embodiment of this application. The second network device 1400 may include one or more central processing units (central processing units, CPUs) 1401 and a memory 1405. The memory 1405 stores one or more application programs or data.

The memory 1405 may be a volatile storage or a persistent storage. The program stored in the memory 1405 may include one or more modules, and each module may include a series of instruction operations on the second network device. Further, the central processing unit 1401 may be configured to: communicate with the memory 1405, and perform, on the second network device 1400, the series of instruction operations in the memory 1405.

The central processing unit 1401 is configured to execute a computer program in the memory 1405, so that the second network device 1400 is configured to perform the following operations: A second network device receives a target packet. The second network device generates packet flow control information based on the target packet, where the packet flow control information includes identification information of the second network device, information about a port from which the target packet flows into the second network device, information about a queue in which the target packet is located in the second network device, and/or priority information of the target packet. The second network device forwards the target packet carrying the packet flow control information. The second network device receives a first flow control notification from a first network device, where the first flow control notification indicates the second network device to perform a flow control operation. The second network device determines to perform the flow control operation. The second network device performs the flow control operation based on the first flow control notification. For a specific implementation, refer to steps 601 to 610 in the embodiment shown in FIG. 6. Details are not described herein again.

The second network device 1400 may further include one or more power supplies 1402, one or more wired or wireless network interfaces 1403, one or more input/output interfaces 1404, and/or one or more operating systems such as Windows ServerTM, Mac OS XTM, UnixTM, LinuxTM, and FreeBSDTM.

The second network device 1400 may perform the operations performed by the second network device in the embodiment shown in FIG. 6. Details are not described herein again.

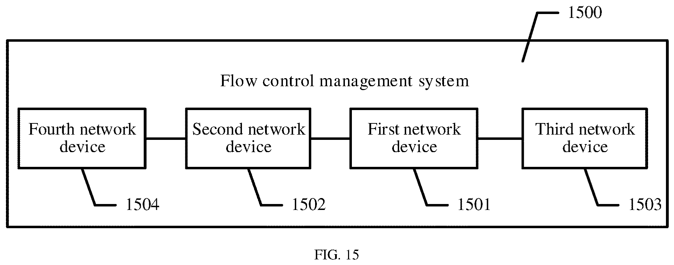

As shown in FIG. 15, an embodiment of this application provides a flow control management system 1500. The flow control management system 1500 includes a first network device 1501, a second network device 1502, a third network device 1503, and a fourth network device 1504. The first network device 1501 may perform the operations performed by the first network device in the embodiment shown in FIG. 6, the second network device 1502 may perform the operations performed by the second network device in the embodiment shown in FIG. 6, the third network device 1503 may perform the operations performed by the third network device in the embodiment shown in FIG. 6, and the fourth network device 1504 may perform the operations performed by the fourth network device in the embodiment shown in FIG. 6. Details are not described herein again.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some procedures (or functions) of embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A network flow control method, wherein the method comprises:
receiving, by a first network device, a target packet from a second network device, wherein the target packet carries packet flow control information, and the packet flow control information comprises identification information of the second network device, information about a port from which the target packet flows into the second network device, information about a queue in which the target packet is located in the second network device, and/or priority information of the target packet;
determining, by the first network device, that the second network device needs to perform a flow control operation;
generating, by the first network device, a first flow control notification based on the packet flow control information; and
sending, by the first network device, the first flow control notification to the second network device, wherein the first flow control notification indicates the second network device to perform the flow control operation.

2. The method according to claim 1, wherein generating, by the first network device, the first flow control notification comprises:
determining, by the first network device, flow control parameter information, location information of the second network device, the flow control port information, the flow control queue information, and/or the priority information of the target packet, wherein the flow control parameter information is used to guide the second network device to perform the flow control operation; and
generating, by the first network device, the first flow control notification, wherein the first flow control notification comprises the flow control parameter information, the location information of the second network device, the flow control port information, the flow control queue information, and/or the priority information of the target packet.

3. The method according to claim 2, wherein the flow control parameter information comprises a time interval, the time interval indicates a time interval for transmission allowed by the first network device in a current periodicity, and determining, by the first network device, the flow control parameter information comprises:
determining, by the first network device, information about the time interval based on a queue depth, a link rate, round trip time between the first network device and the second network device, and an expected queue depth.

4. The method according to any one of claims 1 to 3, wherein a first flow control management segment comprises the first network device and the second network device, a second flow control management segment comprises a third network device, the second flow control management segment is a next segment of the first flow control management segment, and before determining, by the first network device, that the second network device needs to perform the flow control operation, the method further comprises:
receiving, by the first network device, a second flow control notification from the third network device, wherein the flow control notification indicates that the third network device has triggered execution of the flow control operation.

5. The method according to claim 4, wherein determining, by the first network device, that the second network device needs to perform the flow control operation comprises:
determining, by the first network device based on the second flow control notification, that the second network device needs to perform the flow control operation.

6. A network flow control method, wherein the method comprises:
receiving, by a second network device, a target packet;
generating, by the second network device, packet flow control information based on the target packet, wherein the packet flow control information comprises identification information of the second network device, information about a port from which the target packet flows into the second network device, information about a queue in which the target packet is located in the second network device, and/or priority information of the target packet;
forwarding, by the second network device, the target packet carrying the packet flow control information;
receiving, by the second network device, a first flow control notification from the first network device, wherein the first flow control notification indicates the second network device to perform a flow control operation;
determining, by the second network device, to perform the flow control operation; and
performing, by the second network device, the flow control operation based on the first flow control notification.

7. The method according to claim 6, wherein the first flow control notification comprises flow control parameter information, and performing, by the second network device, the flow control operation based on the first flow control notification comprises:
performing, by the second network device, the flow control operation based on the flow control parameter information; and/or
the first flow control notification comprises the information about the flow control port, and performing, by the second network device, the flow control operation based on the indication of the first flow control notification comprises:
performing, by the second network device, the flow control operation on the port indicated by the information about the flow control port; and/or
the first flow control notification comprises the information about the flow control queue, and performing, by the second network device, the flow control operation based on the indication of the first flow control notification comprises:
performing, by the second network device, the flow control operation on the queue indicated by the information about the flow control queue; and/or
the first flow control notification comprises the priority information of the target packet, and performing, by the second network device, the flow control operation based on the indication of the first flow control notification comprises:
performing, by the second network device, the flow control operation based on the priority information of the target packet.

8. The method according to claim 6 or 7, wherein a first flow control management segment comprises the first network device and the second network device, a third flow control management segment comprises a fourth network device on a flow control initiating side, the third flow control management segment is a previous segment of the first flow control management segment, and after receiving, by the second network device, the first flow control notification from the first network device, the method further comprises:
sending, by the second network device, a third flow control notification to the fourth network device, wherein the third flow control notification indicates that the second network device has triggered execution of the flow control operation.

9. A first network device, wherein the first network device comprises:
a first receiving module, configured to receive a target packet from a second network device, wherein the target packet carries packet flow control information, and the packet flow control information comprises identification information of the second network device, information about a port from which the target packet flows into the second network device, information about a queue in which the target packet is located in the second network device, and/or priority information of the target packet;
a determining module, configured to determine that the second network device needs to perform a flow control operation;
a generation module, configured to generate a first flow control notification based on the packet flow control information; and
a sending module, configured to send the first flow control notification to the second network device, wherein the first flow control notification indicates the second network device to perform the flow control operation.

10. The first network device according to claim 9, wherein the generation module comprises:
a determining unit, configured to determine flow control parameter information, location information of the second network device, the flow control port information, the flow control queue information, and/or the priority information of the target packet, wherein the flow control parameter information is used to guide the second network device to perform the flow control operation; and
a generation unit, configured to generate the first flow control notification, wherein the first flow control notification comprises the flow control parameter information, the location information of the second network device, the flow control port information, the flow control queue information, and/or the priority information of the target packet.

11. The first network device according to claim 10, wherein the flow control parameter information comprises a time interval, the time interval indicates a time interval for transmission allowed by the first network device in a current periodicity, and the determining unit is specifically configured to:
determine information about the time interval based on a queue depth, a link rate, round trip time between the first network device and the second network device, and an expected queue depth.

12. The first network device according to any one of claims 9 to 11, wherein a first flow control management segment comprises the first network device and the second network device, a second flow control management segment comprises a third network device on a flow control execution side, the second flow control management segment is a next segment of the first flow control management segment, and the first network device further comprises:
a second receiving module, configured to receive a second flow control notification from the third network device, wherein the flow control notification indicates that the third network device has triggered execution of the flow control operation.

13. The first network device according to claim 12, wherein the determining module is specifically configured to:
determine, based on the second flow control notification, that the second network device needs to perform the flow control operation.

14. A second network device, wherein the second network device comprises:
a first receiving module, configured to receive a target packet;
a generation module, configured to generate packet flow control information based on the target packet, wherein the packet flow control information comprises identification information of the second network device, information about a port from which the target packet flows into the second network device, information about a queue in which the target packet is located in the second network device, and/or priority information of the target packet;
a forwarding module, configured to forward the target packet carrying the packet flow control information;
a second receiving module, configured to receive a first flow control notification from the first network device, wherein the first flow control notification indicates the second network device to perform a flow control operation;
a determining module, configured to determine to perform the flow control operation; and
an execution module, configured to perform the flow control operation based on the first flow control notification.

15. The second network device according to claim 14, wherein the first flow control notification comprises flow control parameter information, and the execution module is specifically configured to:
perform the flow control operation based on the flow control parameter information; and/or
the first flow control notification comprises the information about the flow control port, and the execution module is specifically configured to:
perform the flow control operation on the port indicated by the information about the flow control port; and/or
the first flow control notification comprises the information about the flow control queue, and the execution module is specifically configured to:
perform the flow control operation on the queue indicated by the information about the flow control queue; and/or
the first flow control notification comprises the priority information of the target packet, and the execution module is specifically configured to:
perform the flow control operation based on the flow control parameter information.

16. The second network device according to claim 14 or 15, wherein a first flow control management segment comprises the first network device and the second network device, a third flow control management segment comprises a fourth network device on a flow control initiating side, the third flow control management segment is a previous segment of the first flow control management segment, and the second network device further comprises:
a sending module, configured to send a third flow control notification to the fourth network device, wherein the third flow control notification indicates that the second network device has triggered execution of the flow control operation.

17. A first network device, wherein the first network device comprises a processor and a memory, the processor is coupled to the memory, the memory is configured to store computer instructions, and the computer instructions are loaded and executed by the processor, to cause the first network device to implement the method according to any one of claims 1 to 5.

18. A second network device, wherein the second network device comprises a processor and a memory, the processor is coupled to the memory, the memory is configured to store computer instructions, and the computer instructions are loaded and executed by the processor, to cause the second network device to implement the method according to any one of claims 6 to 8.

19. A computer-readable storage medium, wherein the computer-readable storage medium stores at least one computer program instruction, and the computer program instruction is loaded and executed by a processor to implement the method according to any one of claims 1 to 5.

20. A computer-readable storage medium, wherein the computer-readable storage medium stores at least one computer program instruction, and the computer program instruction is loaded and executed by a processor to implement the method according to any one of claims 6 to 8.

21. A flow control management system, wherein the flow control management system comprises a first network device and a second network device, the first network device is configured to perform the method according to any one of claims 1 to 5, and the second network device is configured to perform the method according to any one of claims 6 to 8.
